# EUROPÄISCHE PATENTSCHRIFT

(11) **EP 3 341 695 B1**
(45) Veröffentlichungstag und Bekanntmachung des Hinweises auf die Patenterteilung: **09.10.2019**
(21) Anmeldenummer: 16713950.0
(22) Anmeldetag: 05.04.2016
(51) Int. Cl.: G01L 25/00

(54) **VERFAHREN ZUR KALIBRIERUNG EINES IM ANTRIEBSSTRANG EINES KRAFTFAHRZEUGES ANGEORDNETEN DREHMOMENTSENSORS**
METHOD FOR CALIBRATING A TORQUE SENSOR ARRANGED IN THE DRIVETRAIN OF A MOTOR VEHICLE
PROCÉDÉ D'ÉTALONNAGE D'UN CAPTEUR DE COUPLE AGENCÉ DANS LA CHAÎNE CINÉMATIQUE D'UN VÉHICULE AUTOMOBILE

(30) Priorität: 26.08.2015 DE 102015216339
(43) Veröffentlichungstag der Anmeldung: 04.07.2018
(73) Patentinhaber: Continental Automotive GmbH, 30165 Hannover (DE)
(72) Erfinder: GRASS, Philippe, 93053 Regensburg (DE); ZHANG, Hong, 93105 Tegernheim (DE)
(86) Internationale Anmeldenummer: PCT/EP2016/057454
(87) Internationale Veröffentlichungsnummer: WO 2017/032464

(56) Entgegenhaltungen:
- WO-A1-2006/071195
- WO-A1-2013/072314
- US-A- 5 729 454
- US-A1- 2011 167 890

## Beschreibung

Die Erfindung betrifft ein Verfahren zur Kalibrierung eines im Antriebsstrang eines Kraftfahrzeuges angeordneten Drehmomentsensors.

Ein Drehmomentsensor ist aus der DE 10 2006 044 779 B4 bekannt. Hier wird eine Vorrichtung zur Erfassung eines Drehmoments mit einem elastischen Element, das durch das Drehmoment verformbar ist, offenbart. Das elastische Element umgibt einen Innenbereich und einen Sensor, der zur Erfassung einer durch das Drehmoment erzeugten Verformung des Elements unter Bildung von elektrischen Signalen bestimmt ist, wobei der Sensor in dem Innenbereich des elastischen Elements angeordnet ist und das elastische Element wenigstens eine elektrisch leitfähige Struktur aufweist, die den Sensor gegen elektrische Felder aus dem Bereich um das elastische Element wenigstens teilweise abschirmt.

Drehmomentsensoren werden im Antriebstrang von Kraftfahrzeugen eingesetzt, um zum Beispiel das vom Antriebsmotor auf die Antriebsräder übertragene Drehmoment zu messen.

Der Vektor des Drehmoments ergibt sich als Kreuzprodukt des Abstandsvektors mit dem Kraftvektor. Dabei wird der Abstandsvektor vom Bezugspunkt des Drehmoments zum Angriffspunkt der Kraft gebildet. Die Richtung des Drehmomentvektors gibt sowohl die Richtung der Drehachse als auch den Drehsinn des Drehmoments an. Wenn alle Kräfte und Abstandsvektoren in einer Ebene orthogonal zur Drehachse liegen, so vereinfacht sich die Betrachtung, da das Drehmoment dann als Skalar behandelt werden kann. Die Angabe der Richtung reduziert sich in diesem Fall auf das Vorzeichen des Drehmoments. In Übereinstimmung mit der allgemeinen vektoriellen Definition werden Drehmomente, die bei Draufsicht auf die Ebene gegen den Uhrzeigersinn wirken, positiv gezählt, Drehmomente im Uhrzeigersinn entsprechend negativ. Für viele technische Anwendungen, bei denen die Lage der Drehachse durch die Lager vorgegeben ist, ist dieser zweidimensionale Spezialfall der Regelfall. Das Drehmoment, das an der Welle eines Kraftfahrzeuges oder an der Ausgangswelle eines Getriebes gemessen wird, wird auch als Antriebsmoment bezeichnet. Das Drehmoment, das eine Kraftmaschine aus dem Stand leisten kann, oder das eine Arbeitsmaschine oder ein Fahrzeug beim Anfahren benötigt, wird auch als Anfahrmoment bezeichnet.

Als Kraftfahrzeuge im Sinne dieser Patentanmeldung werden alle Kraftfahrzeuge betrachtet, die von einem Antriebsmotor über einen Antriebsstrang eine Kraft zu mindestens einem Antriebsrad übertragen. Hierzu zählen zum Beispiel Personenkraftwagen, Motoräder, Lastkraftwagen, Baumaschinen und auch Schienenfahrzeuge.

Drehmomentsensoren im Antriebsstrang eines Kraftfahrzeuges müssen vor ihrer ersten Benutzung kalibriert werden, um dem vom Drehmomentsensor erzeugten Ausgangssignal einen Wert für das im Antriebsstrang anliegende Drehmoment zuordnen zu können. Bei dieser Kalibrierung werden nach dem Stand der Technik die Antriebswelle und der Drehmomentsensor vor dem Einbau in das Kraftfahrzeug als Baugruppe in ein Kalibrier-System verbracht und dort kalibriert. Danach erfolgt der Einbau der Baugruppe aus der Antriebswelle und dem Drehmomentsensor in das Kraftfahrzeug. Dies hat den Nachteil, dass eine sehr große und schwere Baugruppe in einem entsprechend großen Kalibrier-System kalibriert werden muss. Darüber hinaus ist bei einer Reparatur eines defekten Drehmomentsensors die gesamte Baugruppe, die aus der Antriebswelle und dem Drehmomentsensor besteht, zu demontieren und neu zu kalibrieren. Dies ist aufwendig und teuer.

Aus der WO 2013/072314 A1 ist ein Verfahren zum Kalibrieren eines Detektors einer Dämpfungsanordnung in einem Fahrzeug offenbart.

Die US 2011/0167890 A1 betrifft ein Verfahren und eine Vorrichtung zum Kalibrieren einer Drehmomentmesseinheit.

Aus der US 5 729 454 A ist ein Steuerungsverfahren und ein Steuerungssystem für automatische mechanische Getriebesysteme bekannt.

Die WO 2006/071195 betrifft ein Verfahren zur adaptiven Kompensation eines Temperaturdrifts eines Sensors, der zum Messen des Drehmoments einer Welle oder eines Antriebsstrangs ausgebildet ist.

Der Erfindung liegt somit die Aufgabe zugrunde, ein Verfahren zur Kalibrierung eines im Antriebsstrang eines Kraftfahrzeuges angeordneten Drehmomentsensors anzugeben, dass weniger aufwendig und damit kostengünstiger ist, als das aus dem Stand der Technik bekannte Verfahren zur Kalibrierung eines im Antriebsstrang eines Kraftfahrzeuges angeordneten Drehmomentsensors.

Erfindungsgemäß wird die Aufgabe durch die Merkmale des unabhängigen Patentanspruchs gelöst. Dadurch, dass zunächst der unkalibrierte Drehmomentsensor im vollständig komplettierten Antriebstrang im Kraftfahrzeug angeordnet wird und daraufhin ein erster bekannter Wert für ein Drehmoment an den Antriebsstrang des Kraftfahrzeuges angelegt wird und dann ein zweiter bekannter Wert für ein Drehmoment an den Antriebsstrang des Kraftfahrzeuges angelegt wird und das vom Drehmomentsensor erzeugte erste Ausgangssignal dem ersten bekannten Wert für ein Drehmoment zugeordnet wird und das vom Drehmomentsensor erzeugte zweite Ausgangssignale dem zweiten bekannten Wert für ein Drehmoment zugeordnet wird, womit der Drehmomentsensor im vollständig komplettierten Antriebstrang des Kraftfahrzeuges kalibriert wird, kann auf eine aufwendige und teure Kalibrierung der Baugruppe aus der Antriebswelle und dem Drehmomentsensor in einem separaten Messsystem verzichtet werden. Nach dem erfindungsgemäßen Verfahren wird der unkalibrierte Drehmomentsensor in das Kraftfahrzeug eingebaut und im eingebauten Zustand kalibriet, womit das Fahrzeug selber zum Bestandteil des zur Kalibration notwendigen Messystems wird.

Bei der Erfindung entspricht der erste bekannte Wert für ein Drehmoment, der an den Antriebsstrang des Kraftfahrzeuges angelegt wird, einem Null-Drehmoment. Da in dieser Situation an der Antriebswelle kein Drehmoment anliegt, kann dem entsprechenden Messwert des Drehmomentsensors der Drehmomentwert Null zugeordnet werden.

Gemäß einer vorteilhaften Weiterbildung entspricht der zweite bekannte Wert für ein Drehmoment, der an den Antriebsstrang des Kraftfahrzeuges angelegt wird, einem Maximal-Drehmoment. Mit dem Maximal-Drehmoment ist ein zweiter Messpunkt vorhanden, der dem entsprechenden Messwert des Drehmomentsensors zugeordnet werden kann

Bei einer nächsten Weiterbildung wird das Null-Drehmoment durch das Öffnen einer Kupplung und/oder das Einlegen eines Getriebeleerlaufs erzeugt. Dies ist eine sehr einfache Vorgehensweise, um den Drehmomentsensor auf den Nullpunkt zu kalibrieren.

Darüber hinaus ist es vorteilhaft, wenn das Maximal-Drehmoment durch eine Volllastfahrt bzw. die Simulation einer Volllastfahrt erzeugt wird. Hierdurch wird auf sehr einfache Art ein zweiter Wert zur Kalibration des Drehmomentsensors bereitgestellt.

Die Erfindung lässt zahlreiche Ausgestaltungen zu. Einige davon sollen anhand der in den Zeichnungen dargestellten Figuren erläutert werden. Diese zeigen in:
- Figur 1: eine Messbrückenschaltung für die Drehmomenterkennung in einem Kraftfahrzeug,
- Figur 2: einen Drehmomentsensor mit einem elastischen Element,
- Figur 3: eine Werkhalle, in der sich ein Kraftfahrzeug befindet.

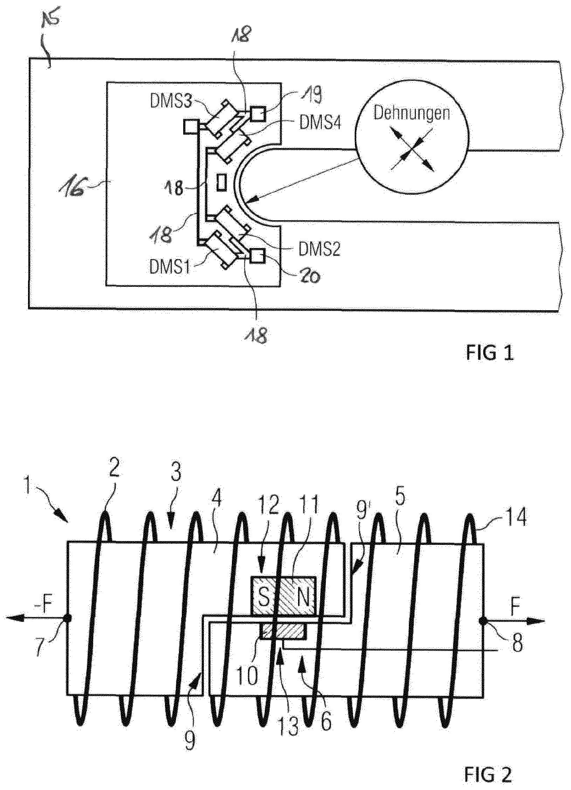

In Figur 1 ist eine Messbrückenschaltung für eine Drehmomenterkennung, wie sie in einem Kraftfahrzeug 21 verwendet wird, dargestellt. Auf einer auf Torsion zu belastenden Trägerwelle 15 ist eine Isolationsschicht 16 angeordnet. Auf die Isolationsschicht 16 ist eine Widerstandsmessbrücke in Dickschichttechnik aufgebracht, welche aus dehnungsempfindlichen Messwiderständen DMS1 bis DMS4 besteht. Die Messwiderstände DMS1 bis DMS4 sind durch Leiterbahnen 18 elektrisch zu der Messbrücke verschaltet. Zum Abgriff der elektrischen Signale, die sich in Form von Potentialdifferenzen im Falle der Dehnung der Messwiderstände DMS1 bis DMS4 ausbilden, sind Messpunkte 19, 20 vorgesehen. Alternativ können die Signale auch über weitere Leiterbahnen direkt einer auf dem Dickschichtisolator 16 angeordneten elektronischen Auswerteschaltung zugeführt werden, die hier nicht weiter dargestellt ist. Um eine maximale Flächendehnung in den Messwiderständen DMS1 bis DMS4 zu erhalten, wird eine durchgängige Ausnehmung in die metallische Trägerwelle 1 eingebracht. Hier ist eine Ausnehmung in Form eines Langlochs dargestellt, es sind aber auch anders geformte Ausnehmungen vorteilhaft einsetzbar. Eine derartige Messbrückenschaltung kann zur Messung eines Drehmoments im Antriebsstrang eines Kraftfahrzeuges 21 verwendet werden.

Figur 2 zeigt einen Drehmomentsensor 1 mit einem elastischen Element 2, das einen Innenbereich 3 umgibt, und einen zweiteiligen an Haltern 4 und 5 gehaltenen Sensor 6 zur Erfassung einer durch die Kraft erzeugten Verformung des elastischen Elements 2 und damit des an der Vorrichtung 1 anliegenden Drehmoments unter Bildung von elektrischen Signalen. Das Sensorelement 6 ist in dem Innenbereich 3 des elastischen Elements 2 angeordnet.

Das elastische Element 2 ist in diesem Ausführungsbeispiel eine Schraubenfeder aus einem weichmagnetischen, elektrisch leitenden Federstahl. Die Ganghöhe der Schraubenfeder ist so gewählt, dass diese, anders als in der schematischen Zeichnung dargestellt, eine möglichst große Anzahl von Windungen aufweist. Die Federkonstante ist in Abhängigkeit von der maximalen Größe des zu erfassenden Drehmomentes so gewählt, dass eine vorgegebene elastische Längenänderung der Schraubenfeder bei Wirkung der maximalen Kraft einen vorgegebenen Maximalwert nicht überschreitet.

In dem von dem elastischen Element 2 umschlossenen Innenraum 3 befinden sich die beiden Halter 4 und 5, die zum einen Ankoppelstellen 7 und 8 aufweisen, an denen externe Elemente zur Kraftübertragung angekoppelt werden können. Zum anderen ist jeder der Halter 4 und 5 mit einem anderen Ende des elastischen Elements 2 als Angriffspunkt verbunden, so dass eine Relativbewegung der Halter 4 und 5 entlang der Schraubenachse des elastischen Elements zu einer Verformung, hier genauer Stauchung oder Dehnung des elastischen Elements 2, in vorzugsweise linearer Abhängigkeit von der Kraft führt. Die Halter dienen daher auch als Koppelelemente.

Die in ihrer Grundform zylindrischen Halter 4 und 5 sind dazu entlang der Schraubenachse linear durch eine nicht gezeigte Führung, beispielsweise einen koaxial zu der Schraubenachse verlaufenden durch eine entsprechende Führungsbohrung in den Haltern 4 und 5 verlaufenden Stab, geführt.

Das Sensorelemnt 6 ist als zweiteiliges, berührungslos arbeitendes Sensorelement ausgeführt und umfasst als Magnetfeldsensor ein Hall-Sensorelement 10 und als zweiten Teil einen Permanentmagneten 11. Das Hall-Sensorelement 10 und der Magnet 11 sind so in Aufnahmen 12 und 13 in dem Halter 4 bzw. 5 in den parallel zueinander verlaufenden Flächen der Enden der Halter 4 bzw. 5 im Bereich der Ausnehmungen 9, 9' angeordnet, dass der Dipol des Magneten 11 parallel zu der Richtung der Relativbewegung der Halter 4 und 5 bzw. der Schraubenachse des elastischen Elements 2 verläuft und eine Bewegung des Magneten 11 relativ zu dem Hall-Sensorelement 10 durch diesen erfassbar ist.

Das Hall-Sensorelement 10 verfügt in diesem Ausführungsbeispiel bereits über eine Auswerteeinrichtung, die die Signale des Hall-Sensorelementes 10 verarbeitet und verstärkt. Signale des Sensorelements 6 können über eine in dem Halter 4 geführte Signalleitung erfasst werden.

Bei Einwirkung einer Kraft bzw. eines Drehmomentes zwischen den Haltern 4 und 5 werden diese unter Verformung des elastischen Elements 2, der Schraubenfeder, relativ zueinander bewegt. Das Ausmaß der Bewegung wird durch die elastischen Eigenschaften des elastischen Elements 2 bestimmt. Die der Kraft bzw. dem Drehmoment entsprechende Bewegung wird durch das Sensorelement 6 erfasst, das daraufhin entsprechende Detektionssignale abgibt, das ein Maß für das auf die Vorrichtung einwirkende Drehmoment ist.

Die hier in den Figuren 1 und 2 dargestellten Drehmomentsensoren 1 müssen vor ihrer ersten Inbetriebnahme im Kraftfahrzeug kalibriert werden, um verwertbare Informationen über das im Antriebsstrang anliegende Drehmoment liefern zu können.

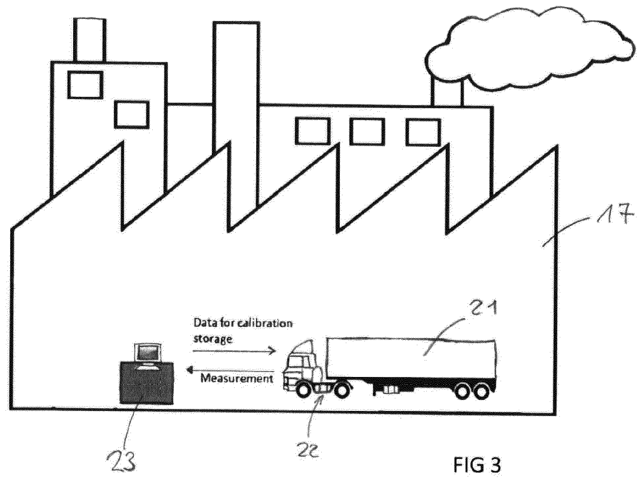

Figur 3 zeigt eine Werkhalle 17, in der sich ein Kraftfahrzeug 21, das hier als Lastkraftwagen dargestellt ist, befindet. In der Werkhalle 17 kann das Verfahren zur Kalibrierung eines im Antriebsstrang 22 des Kraftfahrzeuges 21 angeordneten Drehmomentsensors 1 durchgeführt werden. Hierzu ist in der Werkhalle 17 eine Messstation 23 angeordnet, die die Messdaten des Drehmomentsensors einerseits und zumindest den ersten bekannten Wert für ein Drehmoment, das am Antriebsstrang 22 des Kraftfahrzeuges 21 anliegt, und einen zweiten bekannten Wert für ein Drehmoment, das an dem Antriebsstrang 22 des Kraftfahrzeuges 21 anliegt, aufnimmt. Mit dieser Messstation 23 kann der zunächst unkalibrierte Drehmomentsensor, der im vollständig komplettierten Antriebsstrang 22 des Kraftfahrzeuges 21 angeordnet ist, kalibriert werden. Dazu wird ein erster bekannter Wert für ein Drehmoment an den Antriebsstrang 22 des Kraftfahrzeuges 21 angelegt und ein zweiter bekannter Wert für ein Drehmoment an den Antriebsstrang 22 des Kraftfahrzeuges 21 angelegt und daraufhin das vom Drehmomentsensor 1 erzeugte erste Ausgangssignal dem ersten bekannten Wert für ein Drehmoment zugeordnet und das vom Drehmomentsensor 1 erzeugte zweite Ausgangssignal dem zweiten bekannten Wert für ein Drehmoment zugeordnet, wobei der Drehmomentsensor im vollständig komplettierten Antriebsstrang 22 des Kraftfahrzeuges 21 kalibriert wird. Dieses Verfahren vereinfacht die Kalibrierung von Drehmomentsensoren in Kraftfahrzeugen wesentlich, da nicht mehr die komplette Einheit aus dem Antriebsstrang und dem Drehmomentsensor außerhalb des Fahrzeuges kalibriert werden muss, sondern das gesamte Kraftfahrzeug 21 komplett in den Kalibriervorgang einbezogen werden kann. Hierbei ist es zum Beispiel denkbar, dass der erste bekannte Wert für ein Drehmoment, der an den Antriebsstrang 22 des Kraftfahrzeuges 21 angelegt wird, ein Null-Drehmoment ist. Null-Drehmoment bedeutet in diesem Zusammenhang, dass auf der Antriebswelle, deren Drehmoment beobachtet werden soll, kein Drehmoment anliegt. Dies kann zum Beispiel dadurch erreicht werden, dass die Kupplung zwischen dem Antriebsmotor und den Antriebsrädern geöffnet ist, oder im Getriebe die Leerlaufstufe eingelegt wurde.

Weiterhin kann in der Werkhalle 17 ein Maximaldrehmoment an den Antriebsstrang 22 des Kraftfahrzeuges 21 angelegt werden, in dem zum Beispiel eine Volllastfahrt des Kraftfahrzeuges 21 simuliert wird. Es ist auch denkbar, dass eine außerhalb des Kraftfahrzeuges 21 in der Halle 17 angeordnete Maschine einen genau definierten Drehmomentwert an den Antriebsstrang 22 des Kraftfahrzeuges 21 anlegt und diesen an die Messstation 23 sendet, woraufhin die Messstation 23 mit den gemessenen Werten vom Drehmomentsensor 1 eine Kalibration des Drehmomentsensors 1 dem vollständig komplettierten Antriebsstrang 22 innerhalb des Kraftfahrzeuges 21 vornimmt. Auch innerhalb des Kraftfahrzeuges 21 angeordnete Maschinen können den ersten und den zweiten bekannten Wert für ein Drehmoment an den Antriebsstrang des Kraftfahrzeuges 21 anlegen. Hierbei ist es denkbar, dass der Verbrennungsmotor des Kraftfahrzeuges 21 genutzt wird, um definierte Drehmomente an den Antriebsstrang anzulegen. Es ist auch denkbar, das Kennfeld des Verbrennungsmotors des Kraftfahrzeuges 21 mit den Messwerten des Drehmomentsensors zu korrelieren und damit eine Eichung des Drehmomentsensors zu erhalten. Darüber hinaus ist es denkbar, dass ein im Kraftfahrzeug 21 angeordneter Elektromotor einen ersten und einen zweiten bekannten Messwert für ein Drehmoment an den Antriebsstrang 22 anlegt. Auch hiermit kann die Kalibrierung des Drehmomentsensors im Antriebsstrang des Kraftfahrzeuges erfolgen.

## Patentansprüche

1. Verfahren zur Kalibrierung eines im Antriebsstrang (22) eines Kraftfahrzeuges (21) angeordneten Drehmomentsensors (1), **wobei** zunächst der unkalibrierte Drehmomentsensor (1) im vollständig komplettierten Antriebstrang im Kraftfahrzeug (21) angeordnet wird und daraufhin ein erster bekannter Wert für ein Drehmoment an den Antriebsstrang des Kraftfahrzeuges (21) angelegt wird und dann ein zweiter bekannter Wert für ein Drehmoment an den Antriebsstrang des Kraftfahrzeuges (21) angelegt wird und das vom Drehmomentsensor (1) erzeugte erste Ausgangssignal dem ersten bekannten Wert für ein Drehmoment zugeordnet wird und das vom Drehmomentsensor (1) erzeugte zweite Ausgangssignale dem zweiten bekannten Wert für ein Drehmoment zugeordnet wird, womit der Drehmomentsensor (1) im vollständig komplettierten Antriebstrang des Kraftfahrzeuges (21) kalibriert wird, **dadurch gekennzeichnet, dass** der erste bekannte Wert für ein Drehmoment, der an den Antriebsstrang des Kraftfahrzeuges (21) angelegt wird, einem Null-Drehmoment entspricht, bei dem am Antriebsstrang kein Drehmoment anliegt.

2. Verfahren zur Kalibrierung eines im Antriebsstrang eines Kraftfahrzeuges (21) angeordneten Drehmomentsensors (1) nach Anspruch 1, d a **durch gekennzeichnet,** dass der zweite bekannte Wert für ein Drehmoment, der an den Antriebsstrang des Kraftfahrzeuges (21) angelegt wird, einem Maximal-Drehmoment entspricht.

3. Verfahren zur Kalibrierung eines im Antriebsstrang eines Kraftfahrzeuges (21) angeordneten Drehmomentsensors (1) nach Anspruch 1, **dadurch gekennzeichnet, dass** das Null-Drehmoment durch das Öffnen einer Kupplung und/oder das Einlegen eines Getriebeleerlaufs erzeugt wird.

4. Verfahren zur Kalibrierung eines im Antriebsstrang eines Kraftfahrzeuges (21) angeordneten Drehmomentsensors (1) nach Anspruch 2, **dadurch gekennzeichnet, dass** das Maximal-Drehmoment durch eine Volllastfahrt bzw. die Simulation einer Volllastfahrt erzeugt wird.

## Claims

1. Method for calibrating a torque sensor (1) which is arranged in the drivetrain (22) of a motor vehicle (21), wherein firstly the uncalibrated torque sensor (1) is arranged in the fully completed drivetrain in the motor vehicle (21) and subsequently a first known value for a torque is applied to the drivetrain of the motor vehicle (21) and then a second known value for a torque is applied to the drivetrain of the motor vehicle (21) and the first output signal which is generated by the torque sensor (1) is assigned to the first known value for a torque and the second output signal which is generated by the torque sensor (1) is assigned to the second known value for a torque, the torque sensor (1) being calibrated in the fully completed drivetrain of the motor vehicle (21) in this way, **characterized in that** the first known value for a torque, which first known value is applied to the drivetrain of the motor vehicle (21), corresponds to a zero torque, in which case no torque is applied to the drivetrain.

2. Method for calibrating a torque sensor (1) which is arranged in the drivetrain of a motor vehicle (21) according to Claim 1, **characterized in that** the second known value for a torque, which second known value is applied to the drivetrain of the motor vehicle (21) corresponds to a maximum torque.

3. Method for calibrating a torque sensor (1) which is arranged in the drivetrain of a motor vehicle (21) according to Claim 1, **characterized in that** the zero torque is generated by opening a clutch and/or engaging neutral in a transmission.

4. Method for calibrating a torque sensor (1) which is arranged in the drivetrain of a motor vehicle (21) according to Claim 2, **characterized in that** the maximum torque is generated by driving under full load or simulating driving under full load.

## Revendications

1. Procédé d'étalonnage d'un capteur de couple (1) agencé dans la chaîne cinématique (22) d'un véhicule automobile (21), dans lequel le capteur de couple (1) non étalonné est tout d'abord agencé dans la chaîne cinématique entièrement équipée du véhicule automobile (21), après quoi une première valeur connue pour un couple est appliquée à la chaîne cinématique du véhicule automobile (21) et une deuxième valeur connue pour un couple est ensuite appliquée à la chaîne cinématique du véhicule automobile (21) et le premier signal de sortie généré par le capteur de couple (1) est associé à la première valeur connue pour un couple et le deuxième signal de sortie généré par le capteur de couple (1) est associé à la deuxième valeur connue pour un couple, le capteur de couple (1) étant ainsi étalonné dans la chaîne cinématique entièrement équipée du véhicule automobile (21), **caractérisé en ce que** la première valeur connue pour un couple, qui est appliquée à la chaîne cinématique du véhicule automobile (21), correspond à un couple nul, pour lequel aucun couple n'est appliqué à la chaîne cinématique.

2. Procédé d'étalonnage d'un capteur de couple (1) selon la revendication 1 agencé dans la chaîne cinématique d'un véhicule automobile (21), **caractérisé en ce que** la deuxième valeur connue pour un couple, qui est appliquée à la chaîne cinématique du véhicule automobile (21), correspond à un couple maximal.

3. Procédé d'étalonnage d'un capteur de couple (1) selon la revendication 1 agencé dans la chaîne cinématique d'un véhicule automobile (21), **caractérisé en ce que** le couple nul est généré par ouverture d'un embrayage et/ou par introduction d'un point mort de transmission.

4. Procédé d'étalonnage d'un capteur de couple (1) selon la revendication 2 agencé dans la chaîne cinématique d'un véhicule automobile (21), **caractérisé en ce que** le couple maximal est généré par un fonctionnement à pleine charge ou par simulation d'un fonctionnement à pleine charge.
